# EUROPÄISCHE PATENTSCHRIFT

(11) **EP 0 290 725 B1**
(45) Veröffentlichungstag und Bekanntmachung des Hinweises auf die Patenterteilung: **11.08.1993**
(21) Anmeldenummer: 88102952.4
(22) Anmeldetag: 27.02.1988
(51) Int. Cl.: H04Q 7/04

(54) **Verfahren zum Bestimmen des ungefähren Aufenthaltsortes einer mobilen Funkstation**
Method for approximately locating a mobile radio station
Procédé de localisation approximative d'une station radio mobile

(30) Priorität: 15.05.1987 DE 3716320
(43) Veröffentlichungstag der Anmeldung: 17.11.1988
(73) Patentinhaber: ROBERT BOSCH GMBH, 70442 Stuttgart (DE)
(72) Erfinder: Schips, Kurt, Dipl.-Ing., D-7016 Gerlingen (DE); Siegle, Gert, Prof. Dr. Dipl.-Phys., D-1000 Berlin 38 (DE)

(56) Entgegenhaltungen:
- EP-A- 0 037 069
- EP-A- 0 048 868
- EP-A- 0 052 692
- EP-A- 0 069 275
- EP-A- 0 199 266
- EP-A- 0 295 678
- NTG FACHBERICHTEN, Band 90, November 1985, Seiten 157-164, Berlin, DE; H. HALAMEK et al.: "Grundlagen und Praxis der Funkzellengestaltung mit Relativer Entfernungsmessung im Netz C der DBP"
- IEE PROCEEDINGS SECTIONS A-I, Band 130, Nr. 6, Teil F, Oktober 1983, Seiten 527-531, Old Woking, Surrey, GB; P.J. CADMAN et al.: "Data transmission over VHF and UHF land mobile radio channels"

## Beschreibung

Die Erfindung betrifft ein Verfahren nach dem Oberbegriff des Anspruchs 1.

### Stand der Technik

Es ist ein Verfahren nach dem Oberbegriff des Anspruchs 1 bekannt (Funkschau, 1986, Heft 2, Seiten 43 bis 48), bei dem das Prinzip der relativen Entfernungsmessung angewendet wird. Danach beobachten die Feststationen bzw. Funkkonzentratoren in den Funkzellen über Funkmeßempfänger alle Funkkanäle in ihrer Umgebung. Die verbindungsführende Feststation mißt kontinuierlich die Laufzeit der Signale zwischen ihr und einer zu ortenden mobilen Funkstation. Die Laufzeitinformation wird von der Feststation wieder ausgestrahlt, von der mobilen Funkstation empfangen und erneut ausgesendet. Aus diesen Daten und den unterschiedlichen Laufzeiten können die umliegenden Feststationen die relative Lage einer mobilen Funkstation ermitteln.

Darüber hinaus werden bei dem bekannten Verfahren in den Feststationen auch die Übertragungsqualität und/oder die Signalstärken ausgewertet, mit denen die mobilen Funkstationen bei den Feststationen empfangen werden. Diese Auswertung dient dazu, die Sendeleistung möglichst gering zu halten, um Störungen anderer mobiler Funkstationen im Funkverkehr zu vermeiden.

Weiter bekannt ist ein Funknetz (EP 0 005 692 A1), bei dem der Aufenthaltsort einer mobilen Station mittels Übertragung von Funkbereichsnummern bestimmt wird. Diese Positionsbestimmung ist allerdings relativ ungenau.

### Aufgabe

Der Erfindung liegt die Aufgabe zugrunde, den Aufwand für das Bestimmen des Aufenthaltsortes einer mobilen Funkstation in einem zellularen Funktelefonnetz möglichst gering zu halten. Weiterhin soll verhindert werden, daß die von einer Feststation zu einer zentralen Auswertestelle übertragenen Ortsinformationen ohne Zustimmung des Benutzers der mobilen Funkstation weitergeleitet werden.

### Lösung und erzielbare Vorteile

Diese Aufgabe wird bei einem gattungsgemäßen Verfahren durch die kennzeichnenden Merkmale des Anspruchs 1 gelöst. Die mit der Erfindung erzielten Vorteile bestehen insbesondere darin, daß eine Bestimmung des Aufenthaltsortes einer mobilen Funkstation mit einer für viele Anwendungszwecke ausreichenden Genauigkeit möglich ist, ohne daß es dazu eines hohen technischen Aufwandes bedarf. Ein weiterer wesentlicher Vorteil besteht darin, daß keine zusätzliche Infrastruktur für ein bestehendes Funktelefonnetz geschaffen zu werden braucht, um das landesweit deckende Ortungsverfahren anzuwenden. Insbesondere vermindert sich durch die Einführung des erfindungsgemäßen Verfahrens der Aufwand für das Kartographieren in wenig besiedelten Gebieten, für die eine höhere Ortungsgenauigkeit als die Größe einer Funkzelle nicht erforderlich ist. Ein bevorzugtes Anwendungsgebiet für die Erfindung ist das von der Deutschen Bundespost eingeführte öbL-Netz C.

### Beschreibung eines Ausführungsbeispiels

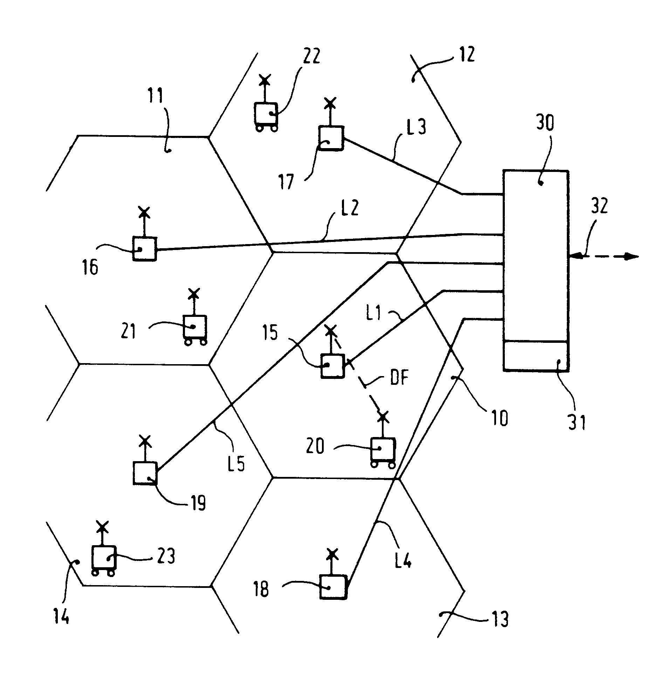

Ein Ausführungsbeispiel der Erfindung ist in der Zeichnung anhand einer einzigen Figur dargestellt und wird im folgenden näher beschrieben.

Die Figur zeigt ein Blockschaltbild eines Funktelefonnetzes mit über ein Funkgebiet räumlich verteilt angeordneten Funkzellen 10 ... 14. Jede Funkzelle weist eine Feststation 15 ... 19 auf, die über je eine Leitung L1 ... L5 mit einer zentralen Auswertestelle 30, das ist zum Beispiel eine Funk-Draht-Vermittlungsstelle, verbunden ist. Zu der Auswertestelle gehört ein Auswerter 31. Innerhalb des gesamten Funkgebietes operieren mobile Funkstationen 20 ... 23, die über die Feststationen und die damit verbundene Funk-Draht-Vermittlungsstelle 30 über Leitungen 32 mit Teilnehmern eines drahtgebundenen Fernsprechnetzes in Verbindung treten können. Die Feststationen 15 ... 19 senden in bestimmten Zeitabständen Datentelegramme DF aus, die unter anderem auch die individuelle Feststationsnummer der betreffenden Feststation, zum Beispiel 15, in digital kodierter Form enthalten. Eine das Datentelegramm DF der Feststation 15 empfangende mobile Funkstation, zum Beispiel 20, wertet das Datentelegramm DF aus und lagert die kodierte Feststationsnummer in das Sprachsignal ein und sendet das Sprachsignal zusammen mit der als Ortsinformation dienenden Feststationsnummer über die betreffende Feststation 15 und die Leitung L1 an die zentrale Auswertestelle 30, deren Auswerter 31 die Feststationsnummer auswertet. In der zentralen Auswertestelle kann anhand einer Landkarte aus der Feststationsnummer die entsprechende Funkzelle 10 und damit der ungefähre augenblickliche Aufenthaltsort der mobilen Funkstation 20 ermittelt werden. Diese nur sehr grobe Standortbestimmung für die mobile Funkstation reicht zum Beispiel aus, wenn sich diese in einem dünn besiedelten Gebiet, zum Beispiel auf einer Autobahn, aufhält. Von besonderem Vorteil ist es, wenn das von der mobilen Funkstation ausgesendete Signal auch die Teilnehmernummer der mobilen Funkstation enthält.

Eine etwas genauere Bestimmung des Aufenthaltsortes einer mobilen Funkstation erhält man, wenn als Ortsinformation zusätzlich zu der Feststationsnummer eine Feldstärkeinformation von der mobilen Funkstation, zum Beispiel 20, über die Feststation, zum Beispiel 15, und die Leitung L1 an die zentrale Vermittlungsstelle 30 gesendet wird. Im einzelnen wird dabei folgendermaßen vorgegangen. Sobald die mobile Funkstation 20 Signale aussendet, dies geschieht beispielsweise schon beim Inbetriebnehmen der mobilen Funkstation und auch im Stand-by-Betrieb, mißt die der mobilen Funkstation 20 benachbarte Feststation 15 die Feldstärke der empfangenen Signale und bildet aus der Feldstärke eine digitale Feldstärkeinformation. Diese Information wird zusammen mit der Feststationsnummer der Feststation 15 als Datentelegramm ausgesendet, in der mobilen Funkstation 20 ausgewertet, in das Sprachsignal eingelagert und zusammen mit diesem über die Feststation 15 und die Leitung L1 an die zentrale Auswertestelle 30 ausgesendet. Der Auswerter 31 der zentralen Auswertestelle 30 erkennt in diesem Falle nicht nur die Feststationsnummer bzw. die Lage der zugehörigen Funkzelle 10, sondern auch den von dem Betrag der Feldstärkeinformation abhängigen Abstand zwischen Feststation 15 und mobiler Funkstation 20. Nur innerhalb von Städten bzw. für Navigationszwecke müßte dann auf ein genaueres Ortungssystem umgeschaltet werden.

Die aus Feststationsnummer und Feldstärkeinformation bestehende Ortsinformation kann gewünschtenfalls auch derart variiert werden, daß die Feldstärkeinformation aus der in der mobilen Funkstation gemessenen Feldstärke der Feststation gebildet wird. Es wird also die Feldstärke der von der Feststation, zum Beispiel 15, ausgesendeten Signale gemessen und in eine digitale Feldstärkeinformation umgewandelt, die zusammen mit der Feststationsnummer in das Sprachsignal eingelagert wird.

Es ist weiterhin von Vorteil, wenn die Ortsinformation durch eine fahrzeugspezifische Information der mobilen Funkstation ergänzt wird.Die fahrzeugspezifische Information ist beispielsweise die Kennung der mobilen Funkstation oder eine Information über den von der mobilen Funkstation zurückgelegten Weg und gegebenenfalls auch die augenblickliche Fahrtrichtung gegenüber einer Bezugsrichtung, zum Beispiel der Nordrichtung.

Die Ortsinformation wird vorzugsweise in Form einer FSK(Frequency Shift Keying)-Modulation dargestellt und in das Sprachsignal eingelagert.

Um zu verhindern, daß die Ortsinformationen an Unbefugte weitergeleitet werden, muß der Teilnehmer der mobilen Funkstation 20 zu der Weiterleitung seine Zustimmung geben. Dies erfolgt dadurch, daß er eine oder mehrere bestimmte Tasten einer zu seiner mobilen Funkstation gehörenden Tastatur betätigt und damit die Auswertung der Feststationsnummer und der Feldstärkeinformation in der mobilen Funkstation auslöst oder zumindest damit die Aussendung der dekodierten Information im Sprachband ermöglicht. Die Speicherung dieser Freischaltung wird in gleicher Weise wie ein Geheimkode auf Dauer wirksam, das heißt auch nach dem Abschalten und Wiedereinschalten der mobilen Funkstation. Für die Eingabe der Freischaltung ist in der Regel der Besitzer der mobilen Funkstation verantwortlich.

Ein Zustimmungssignal, mit dem der Besitzer der mobilen Funkstation sein Einverständnis mit der Weiterleitung der Ortsinformation erklärt, kann vorteilhafterweise als Ergänzung einer Länderkennung vor jedem Fahrtantritt ausgesendet werden. Bei einem Scheckkarten-Funktelefon kann der durch einen Zustimmungskode ergänzte Länderkode in der Scheckkarte gespeichert sein, so daß die Auslösung des Zustimmungssignals bei jedem Einstecken der Scheckkarte in das Funktelefongerät erfolgt.

Allgemein kann die Ortsinformation von einer mobilen Funkstation softwaremäßig gesteuert ausgesendet werden, wenn ein Faktum der folgenden Fakten vorliegt.
- Die mobile Funkstation, zum Beispiel 20, hat auf ihrer Fahrt die Funkzelle gewechselt, zum Beispiel von der Funkzelle 10 zur Funkzelle 13.
- Die mobile Funkstation hat eine bestimmte Wegstrecke zurückgelegt, die mit einem Wegsensor des Fahrzeuges gemessen wurde.
- Ein bestimmtes Zeitintervall von zum Beispiel 30 Minuten nach der Aussendung der letzten Ortsinformation ist verstrichen.
- Die mobile Funkstation hat die Funk-Draht-Vermittlungsstelle 30 angerufen.
- Die mobile Funkstation meldet sich in dem Funktelefonnetz an.
- Die mobile Funkstation meldet sich ab.
- Die mobile Funkstation wird angerufen.

Das beschriebene Ortungsverfahren kann zu einem flächendeckenden Notrufsystem ergänzt werden, das insbesondere für Autobahnen, aber auch für weniger besiedelte Gebiete mit geringerem Verkehrsaufkommen vorteilhaft ist.

Zum Absetzen eines Notrufs kann die mobile Funkstation eine Notruftaste aufweisen, bei deren Betätigung automatisch ein Notrufsignal und die Kennung der mobilen Funkstation sowie die von der Feststation empfangene Information ausgesendet werden. Somit kann der ungefähre augenblickliche Standort der mobilen Funkstation verhältnismäßig schnell ermittelt und der mobilen Funkstation Hilfe geschickt werden. Der Notruf geht an eine oder mehrere vorher festgelegte, durch den Teilnehmer programmierbare Stellen, das sind in der Regel die Polizei oder die Feuerwehr oder sonstige Einrichtungen. Das Notrufsystem läßt sich vorteilhafterweise dadurch ergänzen, daß, zum Beispiel durch eine Doppelbetätigung der Notruftaste der mobilen Funkstation, zu einer vorher festgelegten Gegenstation, die auf der Drahtseite der Funk-Draht-Vermittlungsstelle vorhanden ist, automatisch eine Verbindung hergestellt wird, so daß der Notruf dort hörbar und/oder sichtbar gemacht werden kann. Die Gegenstation ist zum Beispiel eine Temex-, Datex-P-, Teletex-, Bildschirmtext-Station und dergleichen.

Neben dem automatischen Notruf wird durch die Betätigung der Notruftaste die Sprachverbindung hergestellt. Vorteilhafterweise kann auch eine digital gespeicherte Zusatzinformation, wie zum Beispiel "Meldung eines Unfalls", ausgesendet werden. Ist eine digitale Speicherung von Sprachsignalen vorgesehen, so kann die Zusatzinformation in der mobilen Funkstation in ein analoges Signal umgewandelt und zusammen mit der Notrufinformation ausgesendet werden. Die Zusatzinformationen können vorbereitete Texte sein, Angaben über den zurückgelegten Weg der mobilen Funkstation sowie die Uhrzeit der Aussendung sein.

Die Übertragung der Ortsinformation erfolgt vorzugsweise mittels Datentelegramme mit einem selbstkorrigierenden Kode, zum Beispiel einem Interleaving-Kode. Um die Übertragungssicherheit zu erhöhen, sendet die mobile Funkstation die Ortsinformation mehrmals nacheinander aus. Die zentrale Auswertestelle 30 bestätigt dann den ordnungsgemäßen Empfang der Ortsinformation durch ein Quittungssignal. Sobald die mobile Funkstation das Quittungssignal empfangen und ausgewertet hat, wird die Folge von gleichen Ortsinformationen unterbrochen. Als Quittungssignal wird vorzugsweise das von der zentralen Auswertestelle 30 empfangene und die Ortsinformation enthaltende Datentelegramm ausgesendet, wobei das Quittungssignal auf einer Anzeigevorrichtung der mobilen Funkstation angezeigt und/oder mittels eines Druckers ausgedruckt wird.

## Patentansprüche

1. Verfahren zum Bestimmen des ungefähren Aufenthaltsortes einer mobilen Funkstation in einem zellularen Funktelefonnetz mit mobilen Funkstationen und mit einer Feststation je Funkzelle, deren individuelle Feststationsnummern mittels Datentelegramme den im Funkbereich der Feststationen operierenden mobilen Funkstationen mitgeteilt werden, wo die Feststationsnummer der betreffenden Feststation ausgewertet wird und als Ortsinformation dient, welche wiederum in einem Datentelegramm an die Feststation zurückgesendet wird, **dadurch gekennzeichnet,** daß eine in dem von der Feststation (15) an die mobile Funkstation (20) ausgesendeten Datentelegramm enthaltene Feldstärkeinformation, die ein Maß für die bei der Feststation (15) empfangene Feldstärke der mobilen Funkstation (20) ist, in der mobilen Funkstation (20) ausgewertet wird und als zusätzliche Standortinformation im von der mobilen Funkstation (20) an die Feststation (15) gesendeten Datentelegramm mitgesendet wird.

2. Verfahren nach Anspruch 1, dadurch gekennzeichnet, daß in der mobilen Funkstation (20) eine weitere Feldstärkeinformation gebildet wird, die ein Maß für die von der mobilen Funkstation (20) empfangene Feldstärke der Feststation (15) ist, und daß die weitere Feldstärkeinformation als zusätzlicher Bestandteil der Ortsinformation in das von der mobilen Funkstation (20) an die Feststation (15) gesendete Datentelegramm eingefügt wird.

3. Verfahren nach Anspruch 1 oder 2, dadurch gekennzeichnet, daß das von der mobilen Funkstation (20) an die Feststation (15) auszusendende Datentelegramm in das von der mobilen Funkstation (20) nach dem Aufbau einer Sprechverbindung auszusendende Sprachsignal eingelagert wird und daß das Sprachsignal und das Datentelegramm über die Feststation (15) an eine mit der Feststation (15) verbundene zentrale Auswertestelle (30) weitergeleitet werden, in welcher das Datentelegramm ausgewertet wird.

4. Verfahren nach einem der Ansprüche 1 bis 3, dadurch gekennzeichnet, daß die Ortsinformation durch fahrzeugspezifische Informationen, insbesondere die Teilnehmernummer der mobilen Funkstation (20), ergänzt wird.

5. Verfahren nach Anspruch 4, dadurch gekennzeichnet, daß die fahrzeugspezifischen Informationen den von der mobilen Funkstation (20) zurückgelegten Weg und gegebenenfalls die Fahrtrichtung gegenüber einer Bezugsrichtung beinhalten.

6. Verfahren nach einem der Ansprüche 1 bis 4, dadurch gekennzeichnet, daß die Ortsinformation in der mobilen Funkstation (20) als FSK(Frequency Shift Keying)-Modulation in das Sprachsignal eingelagert wird.

7. Verfahren nach Anspruch 1, dadurch gekennzeichnet, daß die zentrale Auswertestelle (30) Bestandteil einer Funk-Draht-Vermittlungsstelle ist.

8. Verfahren nach einem der Ansprüche 1 bis 7, dadurch gekennzeichnet, daß die mobile Funkstation (20) die Ortsinformation der Feststation (15) nach Betätigen einer oder mehrerer bestimmter Tasten auswertet und im Sprachband an die zentrale Auswertestelle (30) weiterleitet.

9. Verfahren nach einem der Ansprüche 1 bis 6 oder 8, dadurch gekennzeichnet, daß die mobilen Funkstationen (20) eine Notruftaste aufweisen, bei deren Betätigung die mobile Funkstation automatisch ein Notrufsignal und gegebenenfalls ein Zustimmungssignal als Ergänzung der Ortsinformation sowie die Teilnehmernummer der mobilen Funkstation und die Ortsinformation zu der Feststation (15) sendet.

10. Verfahren nach Anspruch 8, dadurch gekennzeichnet, daß die mobile Funkstation (20) vor jedem Fahrtantritt das Zustimmungssignal als Ergänzung einer Länderkennung aussendet.

11. Verfahren nach Anspruch 8, dadurch gekennzeichnet, daß bei einem Scheckkarten-Funktelefon in der Scheckkarte ein durch das Zustimmungssignal ergänzter Länderkode gepeichert ist und daß beim Einstecken der Scheckkarte in das Scheckkarten-Funktelefon das Zustimmungssignal einschließlich Länderkode ausgesendet wird.

12. Verfahren nach einem der Ansprüche 1 bis 6 oder 8 bis 11, dadurch gekennzeichnet, daß bei Betätigung einer Sondertaste oder bei Doppelbetätigung der Notruftaste der mobilen Funkstation (20) automatisch über die Feststation (15) oder eine als Funk-Draht-Vermittlungsstelle ausgebildete zentrale Auswertestelle (30) eine Verbindung zu einer vorher festgelegten Gegenstation hergestellt wird, der die Ortsinformation und die Kennung der mobilen Funkstation automatisch mitgeteilt wird.

13. Verfahren nach einem der Ansprüche 1 bis 6 und 8 bis 12, dadurch gekennzeichnet, daß die mobile Funkstation (20) die Ortsinformation aussendet, wenn mindestens eine Bedingung der folgenden Bedingungen erfüllt ist:
a) Die mobile Funkstation hat eine bestimmte Wegstrecke zurückgelegt;
b) die mobile Funkstation hat sich von einer ersten Funkzelle (10) zu einer zweiten oder weiteren Funkzelle (13) bewegt;
c) nach der Aussendung einer Ortsinformation ist ein bestimmtes Zeitintervall abgelaufen;
d) die mobile Funkstation ruft die Funk-Draht-Vermittlungsstelle (30) an;
e) die mobile Funkstation meldet sich im Funktelefonnetz an;
f) die mobile Funkstation meldet sich ab;
g) die mobile Funkstation wird angerufen.

14. Verfahren nach Anspruch 13, bei dem die mobile Funkstation bei jedem Anruf der Funk-Draht-Vermittlungsstelle eine Ortsinformation aussendet, dadurch gekennzeichnet, daß die Ortsinformation auch bei nicht abgenommenem Handapparat der mobilen Funkstation (20) ausgesendet wird, indem nach mehreren Ruftönen die Verbindung automatisch aufgebaut wird.

15. Verfahren nach einem der Ansprüche 1 bis 14, dadurch gekennzeichnet, daß zum Auslösen der von der mobilen Funkstation (20) auszusendenden Signale eine in der mobilen Funkstation (20) enthaltene Software-Sperre aktiviert wird.

16. Verfahren nach Anspruch 15, dadurch gekennzeichnet, daß die Software-Sperre entweder einmalig bei Installation der mobilen Funkstation (20) oder dauernd wirksam aktiviert wird.

17. Verfahren nach Anspruch 15, dadurch gekennzeichnet, daß die Software-Sperre durch in einer bestimmten Kombination zu betätigende Tasten einer Tastatur der mobilen Funkstation (20) realisiert wird.

18. Verfahren nach einem der Ansprüche 1 bis 17, dadurch gekennzeichnet, daß die Übertragung der Ortsinformation mittels Datentelegramme in einem selbstkorrigierenden Kode stattfindet.

19. Verfahren nach Anspruch 18, dadurch gekennzeichnet, daß der selbstkorrigierende Kode, Interleaving, verwendet wird.

20. Verfahren nach Anspruch 18, dadurch gekennzeichnet, daß die mobile Funkstation (20) das Datentelegramm mit der Ortsinformation und der Teilnehmernummer wiederholt aussendet, bis die zentrale Auswertestelle (30) den Empfang durch ein Quittungssignal bestätigt und die mobile Funkstation das Quittungssignal ausgewertet hat.

21. Verfahren nach Anspruch 20, dadurch gekennzeichnet, daß als Quittungssignal das von der zentralen Auswertestelle (30) empfangene Datentelegramm von ihr wieder ausgesendet und in der mobilen Funkstation (20) ausgewertet wird.

22. Verfahren nach Anspruch 20 oder 21, dadurch gekennzeichnet, daß das von der mobilen Funkstation (20) empfangene Quittungssignal auf einer Anzeigevorrichtung der mobilen Funkstation angezeigt und/oder mittels eines Druckers ausgedruckt wird.

23. Verfahren nach Anspruch 4, dadurch gekennzeichnet, daß in der mobilen Funkstation (20) weitere fahrzeugspezifische Informationen, wie zum Beispiel vorbereitete Texte, Angaben über den zurückgelegten Weg und die Uhrzeit, digital gespeichert, abgerufen und in analoger oder digitaler Form in das Sprachsignal eingelagert werden.

## Claims

1. Method for determining the approximate position of a mobile radio station in a cellular radio-telephone network having mobile radio stations and having one fixed station per radio cell, whose individual fixed-station numbers are reported by means of data telegrams to the mobile radio stations operating in the radio region of the fixed stations, where the fixed-station number of the relevant fixed station is evaluated and is used as location information which is in turn transmitted back to the fixed station in a data telegram, **characterised in that** a field strength information item, which is contained in the data telegram transmitted from the fixed station (15) to the mobile radio station (20) and is a measure of the field strength of the mobile station (20) received at the fixed station (15), is evaluated in the mobile radio station (20) and is transmitted, as additional position information, in the data telegram transmitted from the mobile radio station (20) to the fixed station (15).

2. Method according to Claim 1, characterised in that a further field-strength information item is formed in the mobile radio station (20), which item is a measure for the field strength of the fixed station (15) received by the mobile radio station (20), and in that the further field-strength information item is inserted, as an additional component of the location information, into the data telegram which is transmitted by the mobile radio station (20) to the fixed station (15).

3. Method according to Claim 1 or 2, characterised in that the data telegram which is to be transmitted from the mobile radio station (20) to the fixed station (15) is introduced into the voice signal which is to be transmitted from the mobile radio station (20) once a voice connection has been established, and in that the voice signal and the data telegram are passed on via the fixed station (15) to a central evaluation point (30) which is connected to the fixed station (15) and in which the data telegram is evaluated.

4. Method according to one of Claims 1 to 3, characterised in that the location information is supplemented by vehicle-specific information items, especially the subscriber number of the mobile radio station (20).

5. Method according to Claim 4, characterised in that the vehicle-specific information items contain the route travelled by the mobile radio station (20) and possibly the driving direction with respect to a reference direction.

6. Method according to one of Claims 1 to 4, characterised in that the location information in the mobile radio station (20) is introduced into the voice signal as FSK (Frequency Shift Keying) modulation.

7. Method according to Claim 1, characterised in that the central evaluation point (30) is a component of a radio-wire exchange.

8. Method according to one of Claims 1 to 7, characterised in that the mobile radio station (20) evaluates the location information of the fixed station (15) after one or more specific buttons have been operated and passes it on in the voice band to the central evaluation point (30).

9. Method according to one of Claims 1 to 6 or 8, characterised in that the mobile radio stations (20) have an emergency-call button, in the event of whose operation the mobile radio station automatically transmits an emergency-call signal and possibly an agreement signal as a supplement to the location information, as well as the subscriber number of the mobile radio station and the location information, to the fixed station (15).

10. Method according to Claim 8, characterised in that the mobile radio station (20) transmits the agreement signal, as a supplement to a federal state identity, before the start of each journey.

11. Method according to Claim 8, characterised in that, in the case of a cheque-card radio telephone, a federal state code which is supplemented by the agreement signal is stored in the cheque card, and in that the agreement signal, including the federal state code, is transmitted when the cheque card is inserted into the cheque-card radio telephone.

12. Method according to one of Claims 1 to 6 or 8 to 11, characterised in that, in the event of a special button being operated or in the event of double operation of the emergency-call button of the mobile radio station (20), a connection to a previously defined other station is automatically established via the fixed station (15) or a central evaluation point (30) which is designed as a radio-wire exchange, to which other station the location information and the identity of the mobile radio station are automatically reported.

13. Method according to one of Claims 1 to 6 and 8 to 12, characterised in that the mobile radio station (20) transmits the location information when at least one of the following conditions is satisfied:
a) The mobile radio station has travelled a specific distance;
b) the mobile radio station has moved from a first radio cell (10) to a second or further radio cell (13);
c) a specific time interval has elapsed since the transmission of a location information item;
d) the mobile radio station calls the radio-wire exchange (30);
e) the mobile radio station logs into the radio-telephone network;
f) the mobile radio station logs off;
g) the mobile radio station is called.

14. Method according to Claim 13, in which the mobile radio station transmits a location information item whenever the radio-wire exchange is called, characterised in that the location information is transmitted even if the handset of the mobile radio station (20) has not been lifted, in that the connection is established automatically after a plurality of ringing tones.

15. Method according to one of Claims 1 to 14, characterised in that a software block which is contained in the mobile radio station (20) is activated in order to trigger the signals which are to be transmitted by the mobile radio station (20).

16. Method according to Claim 15, characterised in that the software block is activated to be effective either once on installation of the mobile radio station (20), or continuously.

17. Method according to Claim 15, characterised in that the software block is implemented by means of buttons, which are to be operated in a specific combination, in a keyboard of the mobile radio station (20).

18. Method according to one of Claims 1 to 17, characterised in that the transmission of the location information takes place by means of data telegrams in a self-correcting code.

19. Method according to Claim 18, characterised in that the interleaving self-correcting code is used.

20. Method according to Claim 18, characterised in that the mobile radio station (20) transmits the data telegram with the location information and the subscriber number repeatedly until the central evaluation point (30) confirms reception by means of an acknowledgement signal and the mobile radio station has evaluated the acknowledgement signal.

21. Method according to Claim 20, characterised in that the data telegram received by the central evaluation point (30) is transmitted by it again as the acknowledgement signal and is evaluated in the mobile radio station (20).

22. Method according to Claim 20 or 21, characterised in that the acknowledgement signal received by the mobile radio station (20) is displayed on a display device of the mobile radio station and/or is printed out by means of a printer.

23. Method according to Claim 4, characterised in that further vehicle-specific information items, for example prepared texts, statements on the route travelled and the time, are digitally stored, called up and introduced in analog or digital form into the voice signal in the mobile radio station (20).

## Revendications

1. Procédé de localisation approximative d'une station radio mobile dans un réseau radiotéléphonique cellulaire avec des stations radio mobiles et une station fixe par cellule radio dont les numéros individuels de station fixe sont transmis par télégrammes de données aux stations radio mobiles opérant dans le domaine radio des stations fixes, où le numéro de station fixe de la station fixe concernée est traité et sert d'information de localisation, qui est renvoyée à son tour dans un télégramme de données à la station fixe, caractérisé en ce qu'une information d'intensité de champ contenue dans le télégramme de données émis de la station fixe (15) à la station radio mobile (20), qui est une mesure pour l'intensité de champ de la station radio mobile (20) reçue à la station fixe (15), est traitée dans la station radio mobile (20) et est réémise, comme information de localisation supplémentaire dans le télégramme de données émis par la station radio mobile (20) à la station fixe (15).

2. Procédé selon la revendication 1, caractérisé en ce qu'à la station radio mobile (20) on forme une autre information d'intensité de champ, qui est une mesure de l'intensité de champ de la station fixe (15) reçue par la station radio mobile (20), et que l'autre information d'intensité de champ est adjointe dans le télégramme de données envoyé de la station radio mobile (20) à la station fixe (15) comme composante supplémentaire de l'information de localisation.

3. Procédé selon la revendication 1 ou 2, caractérisé en ce que le télégramme de données émis de la station radio mobile (20) à la station fixe (15) est incorporé dans le signal vocal à émettre depuis la station radio mobile (20) après établissement d'une communication vocale et que le signal vocal et le télégramme de données sont transmis via la station fixe (15) à un poste d'exploitation central (30) relié à la station fixe (15).

4. Procédé selon l'une des revendications 1 à 3, caractérisé en ce que l'information de localisation est complétée par des informations spécifiques du véhicule notamment le numéro d'usager de la station radio mobile (20).

5. Procédé selon la revendication 4, caractérisé en ce que les informations spécifiques du véhicule contiennent la distance parcourue par la station de radio mobile (20) et le cas échéant la direction de circulation vis-à-vis d'une direction de référence.

6. Procédé selon l'une des revendications 1 à 4, caractérisé en ce que l'information de localisation dans la station radio mobile (20) est incorporée comme modulation FSK (Frequency Shift Keying) dans le signal vocal.

7. Procédé selon la revendication 1, caractérisé en ce que le poste central d'exploitation (30) fait partie d'un poste de communication radio-fil.

8. Procédé selon l'une des revendications 1 à 7, caractérisé en ce que la station radio mobile (20) traite l'information de localisation de la station fixe (15) après avoir actionné une ou plusieurs touches déterminées et la transmet dans la bande vocale au poste d'exploitation central (30).

9. Procédé selon l'une des revendications 1 à 6 ou 8, caractérisé en ce que les stations radio mobiles (20) présentent une touche d'appel de détresse, dont l'actionnement provoque l'émission automatique d'un signal de détresse par la station radio mobile et le cas échéant un signal d'accord en complément de l'information de localisation ainsi que le numéro d'usager de la station radio mobile et l'information de localisation vers la station fixe (15).

10. Procédé selon la revendication 8, caractérisé en ce que la station radio mobile (20) avant le démarrage envoie le signal d'accord en complément d'une reconnaissance de territoire.

11. Procédé selon la revendication 8, caractérisé en ce que pour une carte de paiement de radiotéléphone est enregistré sur la carte un code de territoire complété par le signal d'accord et que lors de l'insertion de la carte de paiement dans le radiotéléphone à carte, le signal d'accord ainsi que le code de territoire sont émis.

12. Procédé selon l'une des revendications 1 à 6 ou 8 à 11, caractérisé en ce qu'en actionnant une touche spéciale ou en actionnant deux fois la touche de détresse de la station radio mobile (20) on établit automatiquement une liaison via la station fixe (15) ou un poste d'exploitation (30) central constitué en poste de communication radio-fil, avec une station établie au préalable, à laquelle on communique automatiquement l'information de localisation et l'identification de la station radio mobile.

13. Procédé selon l'une des revendications 1 à 6 et 8 à 12, caractérisé en ce que la station radio mobile (20) émet l'information de localisation, quand au moins l'une des conditions suivantes est remplie :
a) La station radio mobile a parcouru une distance définie ;
b) La station radio mobile s'est déplacée d'une première cellule radio (10) à une deuxième ou une autre cellule radio (13) ;
c) Après l'émission d'une information de localisation un certain internvalle de temps s'est écoulé ;
d) La station radio mobile appelle le poste de communication radio-fil (30) ;
e) La station radio mobile s'annonce sur le réseau radiotéléphone ;
f) La station radio mobile se retire ;
g) La station radio mobile est appelée.

14. Procédé selon la revendication 13, dans lequel la station radio mobile émet à chaque appel du poste de communication radio-fil une information de localisation, caractérisé en ce que l'information de localisation est émise même si l'appareil de la station radio mobile (20) n'est pas décroché, en établissant automatiquement la communication après plusieurs sonneries d'appel.

15. Procédé selon l'une des revendications 1 à 14, caractérisé en ce que pour déclencher les signaux à envoyer depuis la station radio mobile (20) un verrou software contenu dans la station radio mobile (20) est activé.

16. Procédé selon la revendication 15, caractérisé en ce que le verrou software est activé une fois lors de l'installation de la station radio mobile (20) ou est activé en permanence.

17. Procédé selon la revendication 15, caractérisé en ce que le verrou software est réalisé par une combinaison déterminée des touches à actionner d'un clavier de la station radio mobile (20).

18. Procédé selon l'une des revendications 1 à 17, caractérisé en ce que la transmission de l'information de localisation se fait au moyen de télégrammes de données dans un code autocorrecteur.

19. Procédé selon la revendication 18, caractérisé en ce qu'on utilise le code autocorrecteur, Interleaving.

20. Procédé selon la revendication 18, caractérisé en ce que la station radio mobile (20) émet le télégramme de données avec l'information de localisation et le numéro de l'usager en les répétant jusqu'à ce que le poste de traitement central (30) confirme la réception par un signal d'accusé de réception et que la station radio mobile ait traité le signal d'accusé de réception.

21. Procédé selon la revendication 20, caractérisé en ce que le poste de traitement central (30) émet comme signal d'accusé de réception le télégramme de données qu'elle a reçu et qu'il est traité dans la station radio mobile (20).

22. Procédé selon la revendication 20 ou 21, caractérisé en ce que le signal d'accusé de réception reçu par la station radio mobile (20) est affiché sur un dispositif d'affichage de la station radio mobile et/ou est imprimé au moyen d'une imprimante.

23. Procédé selon la revendication 4, caractérisé en ce que d'autres informations spécifiques du véhicule sont enregistrées sous forme numérique dans la station radio mobile (20) comme par exemple des textes préparés, des indications de distance parcourue et le temps, on peut les consulter et les incorporer sous forme analogique et numérique dans le signal vocal.
